# EUROPEAN PATENT SPECIFICATION

(11) **EP 1 221 212 B1**
(45) Date of publication and mention of the grant of the patent: **02.02.2005**
(21) Application number: 99950691.8
(22) Date of filing: 11.10.1999
(51) Int. Cl.: H04B 7/26, H04Q 7/22

(54) **METHOD AND APPARATUS FOR SYNCHRONIZATION OF A COMMUNICATION SYSTEM**
VERFAHREN UND VORRICHTUNG ZUR SYNCHRONISIERUNG IN EINEM KOMMUNIKATIONSSYSTEM
PROCEDE ET DISPOSITIF DE SYNCHRONISATION

(43) Date of publication of application: 10.07.2002
(73) Proprietor: Nokia Corporation, 02150 Espoo (FI)
(72) Inventor: RÄSÄNEN, Juha, FIN-02660 Espoo (FI)
(74) Representative: Leson, Thomas Johannes Alois, Dipl.-Ing.
(86) International application number: PCT/EP1999/007596
(87) International publication number: WO 2001/028131

(56) References cited:
- WO-A-98/18244
- US-A- 5 793 744

## Description

### FIELD OF THE INVENTION

The present invention relates to a method and apparatus for synchronizing a first and a second communication end point during a connection mode change procedure in a telecommunication network, such as a GSM network.

### BACKGROUND OF THE INVENTION

In mobile telecommunication networks, the Radio Link Protocol (RLP) is used for data transmission and covers the Layer 2 functionality of the ISO OSI Reference Model. It is tailored to the special needs of digital radio transmission and provides to its users the OSI Data Link Service.

RLP is intended for use with non-transparent data transfer, wherein a protocol conversion may be provided for a variety of protocol configurations. RLP frames are sent in strict alignment with the radio transmission and are of a fixed size of 240 (TCH/F9.6 channel coding) or 576 bits (TCH/F14.4 channel coding). Whenever a frame is to be sent, the RLP entity has to provide the necessary protocol information to be contained in it.

In RLP, a provision is made for a discontinuous transmission (DTX) mode, where the transmission is automatically interrupted when a period with no data to be sent has been detected, to thereby reduce power consumption and interference of neighboring cells. During such a period with no data to be sent, only periodical low layer fill frames are sent in the radio channel.

RLP spans from a mobile station (MS) of the GSM network to an interworking function (IWF) located at the nearest Mobile Switching Center (MSC) or beyond. The RLP link may be initiated by the MS or the MSC/IWF.

RLP has to change the supported frame length due to transitions between different channel codings. The RLP entities then have to be re-synchronized after a change of the channel coding. Any change of the channel coding is indicated to the RLP-entity by an external event. The RLP-entity at the mobile end enters a synchronization state when it receives a relevant Radio Resource Management message, and starts sending a REMAP message at the earliest possible time. The RLP-entity at the network end enters the synchronization state when the network end detects the REMAP message. After the REMAP procedure is completed, the RLP entities leave the synchronization state and normal operation is resumed. An example for such a change of the channel coding is a transition between TCH/F9.6 and TCH/F14.4 channel codings.

In particular, a REMAP exchange is started by the mobile end which sends a REMAP command U frame (unnumbered frame) in the information field of which the RLP entity indicates the respective information according to the old frame format from which the network end should resend the information mapped into a frame format corresponding to the new channel coding. The mobile end sends a REMAP frame on every sending opportunity until a responding REMAP frame is received from the network end. The network end answers by sending a REMAP U frame, wherein a C/R control bit is set to "response". In the information field, the network end indicates the frame number from which the mobile end should remap the information into the new frame format. The network end responds to all REMAP commands it receives. Any REMAP acknowledgment that may arrive at the mobile end after one of them has been received is discarded by the mobile end. The RLP supervises the synchronization state by a timer, wherein the network end enters an Asynchronous Disconnected Mode (ADM) when it does not receive an appropriate U frame within a predetermined time period. The ADM is a data link non-operational mode, where the RLP entity is logically disconnected from the data link and may therefore neither transmit nor accept numbered information frames.

The mobile end stops sending REMAP frames after recognizing the first REMAP frame sent by the network end. Then, the mobile end acknowledges the receipt by sending an I+S or S frame to the network end, and leaves the REMAP synchronization state. In response thereto, the RLP entity at the network end leaves the REMAP synchronization state after receiving the I+S or S frame from the mobile end.

However, in case a mobile station is set into a DTX state, the supervisory frames (S frames) sent by the MS are not sent towards the network end by the lower protocol layers. Consequently, the RLP entity (e.g. IWF) at the network end stays in the REMAP synchronization state and the data transmission fails.

US-A-5 793 744 discloses a mobile communication system with high speed non-transparent data connection. The number of parallel subchannels to be allocated depending from the nominal data transfer rate. A protocol is used where data frames to be transmitted are stored until an acknowledgment is received of a succesful preceding reception. Discontinuous transmission can also be applied on subchannels.

### SUMMARY OF THE INVENTION

It is therefore an object of the present invention to provide a synchronization method and apparatus by means of which a connection mode change procedure can be performed successfully even in a DTX condition.

This object is achieved by a method for synchronizing a first and a second communication end point during a connection mode change procedure, said method comprising the steps of:
entering a connection mode change state at the first end point;
transmitting a connection mode change request message from the first end point to the second end point;
entering a connection mode change state at the second end point in response to a receipt of the connection mode change request message;
transmitting an acknowledgment message and a numbered frame from the second end point to the first end point;
leaving the connection mode change state at the first end point in response to a receipt of the acknowledgment message;
transmitting from the first end point to the second end point an acknowledgment acknowledging the numbered frame; and
leaving the connection mode change state at the second end point in response to a receipt of the acknowledgment acknowledging the numbered frame.

Additionally, the above object is achieved by an apparatus for achieving a synchronization with a communication end point during a connection mode change procedure, said apparatus comprising:
detecting means for detecting a connection mode change request message received from the communication end point;
communication means for performing communication with the communication end point;
control means for setting the communication means into a connection mode change state in response to the detection result of the detection means;
wherein the communication means is arranged to transmit an acknowledgment message and a numbered frame to the communication end point, in response to the setting by the control means into the connection mode change state; and
wherein the control means is arranged to control the communication means so as to leave the connection mode change state, in response to a receipt of an acknowledgment acknowledging the numbered frame from the communication end point.

Accordingly, a numbered frame, e.g. an I+S frame, is transmitted together with the acknowledgment message to the other communication end point. In case this other communication end point is in the DTX state, the numbered frame is acknowledged based on the usual ARQ (Automatic Repeat Request) scheme used for error control. Thereby, an acknowledgment is received even in case of a DTX state of the other communication end point.

Preferably, the first end point may be a mobile station and the second end point an interworking unit.

The connection mode change procedure may be a change of a channel coding, such as a change between TCH/F14.4 and TCH/F9.6 in the RLP.

Furthermore, the change request message may be a REMAP frame of the RLP. The numbered frame may be an I+S frame of the RLP.

Additionally, a counting means may be provided in the synchronization apparatus, for counting the number of acknowledgment messages transmitted by the communication means, wherein said control means may be arranged to perform control such that the communication means transmits the numbered frame after the counting means has reached a predetermined value. Thus, additional numbered frames are transmitted after every predetermined number of acknowledgment messages. Thereby, a slowdown of the exit from the REMAP synchronization state due to a retransmission only after the expiration of the retransmission timer can be prevented.

### BRIEF DESCRIPTION OF THE DRAWINGS

In the following, the present invention will be described in greater detail on the basis of a preferred embodiment with reference to the accompanying drawings, in which:
Fig. 1 shows a principal block diagram of a GSM network connected to a fixed network,
Fig. 2 shows a principal block diagram of a synchronization apparatus according to the preferred embodiment of the present invention,
Fig. 3 shows a flow diagram of a synchronization method according to the preferred embodiment of the present invention, and
Fig. 4 shows a transmission diagram of a REMAP exchange procedure according to the preferred embodiment of the present invention.

### DESCRIPTION OF THE PREFERRED EMBODIMENT

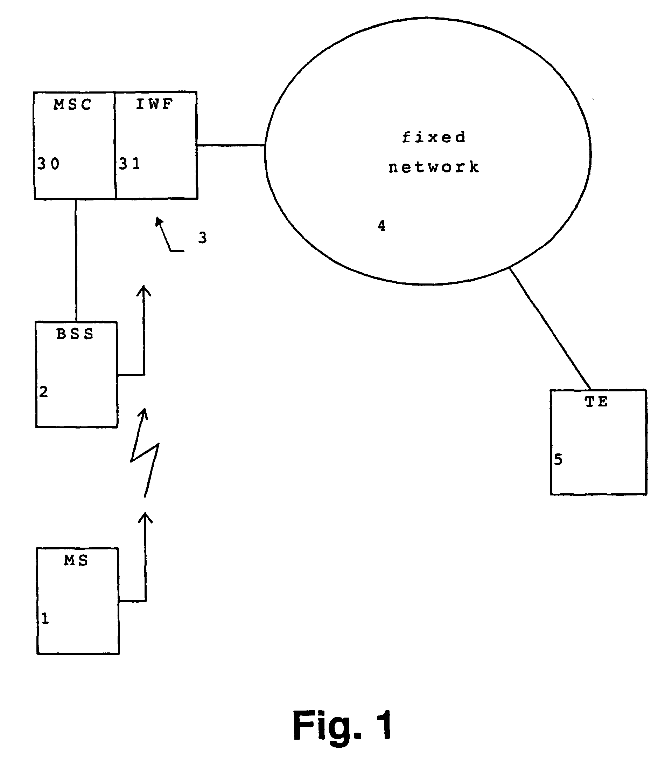

The preferred embodiment will be described on the basis of a communication system as shown in Fig. 1.

According to Fig. 1, an end terminal (TE) 5 is connected via a fixed network 4, e.g. a Public Switched Telephone Network (PSTN), an IP network or the like, to a mobile station (MS) 1 which may be a mobile telephone. The MS 1 is radio-connected to a Base Station Subsystem (BSS) 2 which is connected to a Mobile Switching Center (MSC) 30 having an allocated interworking function unit (IWF) 31. The IWF 31 is provided e.g. for adapting protocol features of the mobile network to protocol features of the fixed network 4.

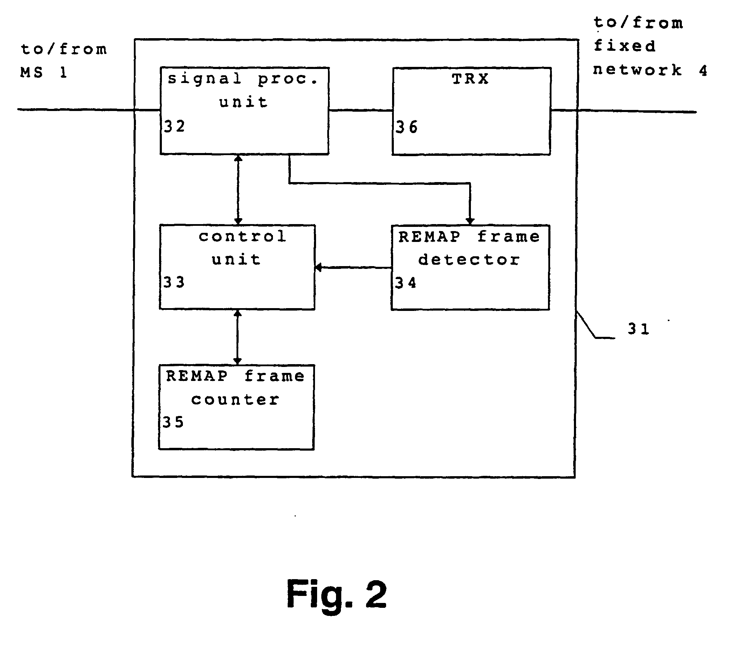

Fig. 2 shows a basic block diagram of an apparatus for achieving a synchronization with communication end points during a connection mode change procedure. According to the preferred embodiment, this synchronization apparatus corresponds to the IWF 31 shown in Fig. 1. However, the apparatus according to Fig. 2 may as well be arranged at a separate location within the mobile network or the fixed network 4. Furthermore, it is to be noted that only those parts relevant to the present invention are included in the basic block diagram shown in Fig. 2, wherein the block functions may be achieved by respective program routines for controlling a processing unit, e.g. a CPU.

According to Fig. 2, the IWF 31 comprises a transceiver unit (TRX) 36 for transmitting/receiving speech or data calls to/from the fixed network 4 or the MS 1, respectively. Thus, the TRX 36 comprises a transmitting and a receiving function so as to achieve a bi-directional data or speech transmission via the fixed network 4 or, respectively, the radio path of the mobile network.

Furthermore, a signal processing unit 32 is connected to the TRX 36. The signal processing unit 32 comprises interworking resources (e.g. transcoding functions, modem functions, rate adaptation functions, etc.) required for adapting data or speech calls of the fixed network 4 to data or speech calls of the mobile network, or vice versa.

The signal processing unit 32 is controlled by a control unit 33 which performs control so as to ensure the required signaling according to the protocols used at the input and output side of the apparatus. Furthermore, a REMAP frame detector 34 is provided for detecting the receipt of a REMAP frame from the mobile station 1. The REMAP frame detector 34 is arranged to supply a corresponding control signal indicating the detection result to the control unit 33. Having received such a control signal, the control unit 33 sets the signal processing unit 32 into a REMAP synchronization state, in which the signal processing unit 32 performs a communication with the MS 1 by transmitting a REMAP acknowledgment message and a numbered I+S frame.

Furthermore, a REMAP frame counter 35 is connected to the control unit 33. The REMAP frame counter 35 is arranged to count the number of REMAP acknowledgment messages transmitted by the signal processing unit 32 to the MS 1 after an I+S frame. The control unit 33 is arranged to repeatedly check the counting result of the REMAP frame counter 35, so as to determine whether a predetermined number of REMAP acknowledgment frames has been detected.

When the signal processing unit 32 receives an acknowledgment frame to the numbered I+S frame, it supplies a corresponding information to the control unit 33 which then controls the signal processing unit 32 so as to leave the REMAP synchronization state.

Thus, even in case the MS 1 is set into a DTX state where the unnumbered S frames are not rooted to the IWF 31, the signal processing unit 32 receives an acknowledgment acknowledging the numbered I+S frame, since such an acknowledgment is transmitted to the network by the lower protocol layers, i.e. the lower layers automatically leave the DTX state if I+S traffic is available.

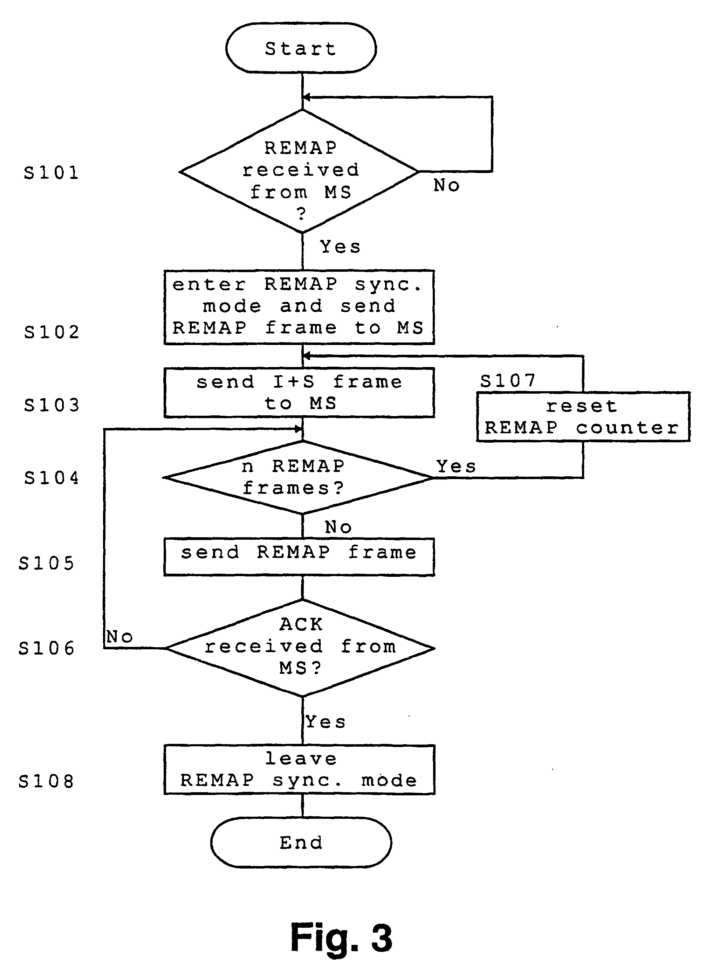

In the following, the synchronization method according to the preferred embodiment is described with reference to Fig. 3.

In step S101, the control unit 33 checks whether the REMAP frame detector 34 has detected the receipt of a REMAP frame from the MS 1. If not, step S101 is continuously repeated at predetermined time intervals.

If a REMAP frame has been received, the control unit 33 performs control such that the signal processing unit 32 is entered into a REMAP synchronization mode and transmits a REMAP acknowledgment frame to the MS 1 (step S102). Furthermore, the control unit 33 controls a signal processing unit 32 so as to transmit a numbered I+S frame to the MS 1 (step S103).

Then, the control unit 33 reads the REMAP frame counter 35 and checks whether a predetermined number n of REMAP frames has been transmitted after the I+S frame (step S104). If not, the control unit 33 controls the signal processing unit 32 so as to transmit a REMAP acknowledgment frame to the MS 1 (step S105).

In case the predetermined number n of REMAP frames has been transmitted after the I+S frame, the flow proceeds to step S107, where the control unit 33 resets the REMAP frame counter 35 to zero. Then, the procedure continues with step S103, where the control unit 33 controls the signal processing unit 32 so as to transmit a numbered I+S frame to the MS 1.

After every transmission of a REMAP frame in step S105, the control unit 33 checks on the basis of an information obtained from the signal processing unit 32, whether the signal processing unit 32 has received an acknowledgment from the MS 1, acknowledging the receipt of the numbered I+S frame (step S106). If not, the procedure continues at step S104, where the number of REMAP frames is checked.

If an acknowledgment has been received from the MS 1, the control unit 33 controls the signal processing unit 32 so as to leave the REMAP synchronization mode (step S108), to thereby terminate the synchronization control procedure.

Accordingly, the IWF 31 transmits a numbered I+S frame after the first REMAP frame to the MS 1. The purpose of this is to compel the MS 1 to acknowledge the end of the REMAP condition as soon as possible after it has received the first REMAP frame from the IWF 31.

In order to increase the probability that the MS 1 has correctly received a REMAP frame before the I+S frame, the IWF 31 may transmit more than one REMAP frames before transmitting the I+S frame.

Furthermore, in order to guarantee a fast exit from the REMAP synchronization state, the IWF 31 may transmit additional numbered I+S frames to the MS 1, e.g. after every n REMAP frames, wherein n is an integer number greater than or equal to 1. If the IWF 31 transmits only one numbered I+S frame and the MS 1 loses or discards this, e.g. because it has failed to receive the first REMAP frame, the retransmission will be performed only after the expiration of a retransmission timer provided according to the GSM specifications, which would slow down the exit from the REMAP synchronization state.

If the IWF 31 has no user data to be sent to the MS 1, e.g. no real need to send an I+S frame to the MS 1, the IWF 31 transmits an empty I+S frame to the MS 1 in order to compel the MS 1 to acknowledge the exit from the REMAP synchronization state. As soon as the IWF receives an acknowledgment from the MS 1 to the transmitted I+S frame, the IWF 31 exits the REMAP synchronization state. Thereby, the REMAP exchange procedure can be performed even in case the MS 1 is set into a DTX condition.

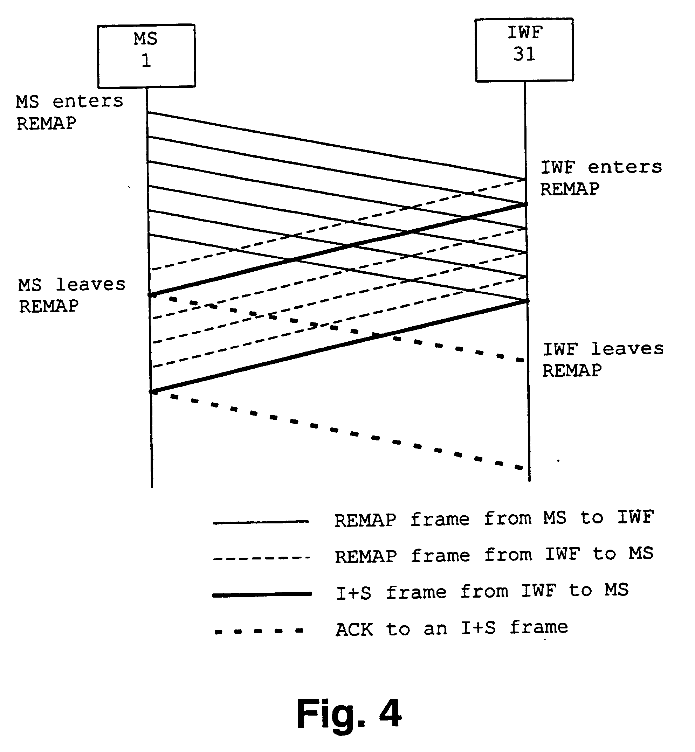

Fig. 4 shows a transmission diagram corresponding to a REMAP exchange procedure as described on the basis of Fig. 3, in a case where the predetermined count number n is set to three. According to Fig. 4, the MS 1 enters the REMAP synchronization state and transmits REMAP frames in predetermined intervals. When the IWF 31 receives the first REMAP frame, it enters the REMAP synchronization state and transmits a REMAP acknowledgment frame (broken line) to the MS 1. Having received the REMAP acknowledgment frame, the MS 1 leaves the REMAP synchronization state. After transmitting the REMAP acknowledgment frame, the IWF 31 transmits a numbered I+S frame (fat line) to the MS 1. The numbered I+S frame is acknowledged according to the RLP with a corresponding acknowledgment ACK (broken fat line). In response to the receipt of the ACK from the MS 1, the IWF 31 leaves the REMAP synchronization state.

Thus, irrespective of a DTX condition at the MS 1, the IWF 31 receives the ACK to the numbered I+S frame, and leaves the REMAP synchronization state as soon as possible. Furthermore, an additional I+S frame is transmitted by the IWF 31 after three successive REMAP frames to thereby ensure a quick receipt of an additional ACK, in case the MS 1 loses or discards the first numbered I+S frame.

In summary, the present invention relates to a synchronization method and apparatus, wherein a first end point entering a connection mode change state transmits a request message to a second end point. The second end point enters the connection mode change state in response to the receipt of the request message and transmits an acknowledgment and a numbered frame to the first end point. Having received the acknowledgment, the first end point leaves the connection mode change state and transmits an acknowledgment acknowledging the numbered frame to the second end point which leaves the connection mode change state in response to the receipt of the acknowledgment. Thus, the receipt of the acknowledgment acknowledging the numbered frame is received by the second end point irrespective of a DTX condition at the first end point, since a numbered frame is always acknowledged.

It is to be noted that the synchronization method and apparatus described in the preferred embodiment may be applied in any telecommunication network where frames are not transmitted towards the network by the lower protocol layers in certain conditions or modes of a communication end point. In particular, the present invention is not restricted to the described REMAP synchronization processing, and can be applied to any connection mode change processing, where a synchronization processing is performed between respective communication end points. The above description of the preferred embodiment and the accompanying drawings are therefore only intended to illustrate the present invention. The preferred embodiment of the invention may vary within the scope of the attached claims.

## Claims

1. A method for synchronizing a first **(1)** and a second **(31)** communication end point during a connection mode change procedure, said method comprising the steps of:
a) entering a connection mode change state at said first end point **(1);**
b) transmitting a connection mode change request message from said first end point **(1)** to said second end point **(31)**;
c) entering a connection mode change state at said second end point **(31)** in response to a receipt of said connection mode change request message;
d) transmitting an acknowledgment message and a numbered frame from said second end point **(31)** to said first end point **(1)**;
e) leaving said connection mode change state at said first end point **(1)** in response to a receipt of said acknowledgment message;
f) transmitting from said first end point **(1)** to said second end point **(31)** an acknowledgment acknowledging said numbered frame; and
g) leaving said connection mode change state at said second end point **(31)** in response to a receipt of said acknowledgment acknowledging said numbered frame.

2. A method according to claim 1, wherein said first end point is a mobile station **(1)** and said second end point is an interworking unit **(31).**

3. A method according to claim 1 or 2, wherein said connection mode change procedure is a change of a channel coding.

4. A method according to claim 3, wherein said change of the channel coding is a change between TCH/F14.4 and TCH/F9.6 in the RLP.

5. A method according to any one of the preceding claims, wherein said change request message is a REMAP frame of the RLP.

6. A method according to any one of the preceding claims, wherein said numbered frame is an I+S frame of the RLP.

7. An apparatus for achieving a synchronization with a communication end point **(1)** during a connection mode change procedure, said apparatus comprising:
a) detecting means **(34)** for detecting a connection mode change request message received from said communication end point **(1)**;
b) communication means **(32)** for performing a communication with said communication end point **(1)**;
c) control means **(33)** for setting said communication means **(32)** into a connection mode change state in response to the detection result of said detection means **(34);**
d) wherein said communication means **(32)** is arranged to transmit an acknowledgment message and a numbered frame to said communication end point, in response to said setting by said control means **(33)** into said connection mode change state; and
e) wherein said control means **(33)** is arranged to. control said communication means **(32)** so as to leave said connection mode change state in response to a receipt of an acknowledgment acknowledging said numbered frame from said communication end point **(1).**

8. An apparatus according to claim 7, wherein said apparatus is an interworking unit **(31)** of a GSM network.

9. An apparatus according to claim 7 or 8, wherein said communication end point is a mobile station **(1).**

10. An apparatus according to any one of claims 7 to 9, wherein said connection mode change procedure is a REMAP procedure of the RLP.

11. An apparatus according to claim 10, wherein said detection means **(34)** is arranged to detect a REMAP frame of the RLP.

12. An apparatus according to any one of claims 7 to 11, wherein counting means **(35)** are provided for counting the number of acknowledgment messages transmitted by said communication means **(32),** and said control means **(33)** is arranged to perform a control such that said communication means **(32)** transmits said numbered frame after said counting means **(35)** has reached a predetermined value.

13. An apparatus according to any one of claims 7 to 12, wherein said numbered frame is an I+S frame of the RLP.

## Patentansprüche

1. Verfahren zum Synchronisieren eines ersten (1) und eines zweiten (31) Kommunikationsendpunktes während eines Verbindungsmodusänderungsvorgangs, mit den Schritten:
a) Eintreten in einen Verbindungsmodusänderungszustand an dem ersten Endpunkt (1);
b) Übertragen einer Verbindungsmodusänderungsanforderungsmitteilung von dem ersten Endpunkt (1) zu dem zweiten Endpunkt (31);
c) Eintreten in einen Verbindungsmodusänderungszustand an dem zweiten Endpunkt (31) als Reaktion auf einen Empfang der Verbindungsmodusänderungsanforderungsmitteilung;
d) Senden einer Bestätigungsmitteilung und eines nummerierten Rahmens von dem zweiten Endpunkt (31) zu dem ersten Endpunkt (1);
e) Verlassen des Verbindungsmodusänderungszustandes an dem ersten Endpunkt (1) als Reaktion auf einen Empfang der Bestätigungsmitteilung;
f) Senden einer den nummerierten Rahmen bestätigenden Bestätigung von dem ersten Endpunkt (1) zu dem zweiten Endpunkt (31); und
g) Verlassen des Verbindungsmodusänderungszustandes an dem zweiten Endpunkt (31) als Reaktion auf einen Empfang der den nummerierten Rahmen bestätigenden Bestätigung.

2. Verfahren nach Patentanspruch 1, wobei der erste Endpunkt eine Mobilstation (1) und der zweite Endpunkt eine Zusammenarbeitseinheit (31) ist.

3. Verfahren nach Patentanspruch 1 oder 2, wobei der Verbindungsmodusänderungsvorgang eine Änderung einer Kanalkodierung darstellt.

4. Verfahren nach Patentanspruch 3, wobei die Änderung der Kanalkodierung eine Änderung zwischen TCH/F14.4 und TCH/F9.6 in dem RLP ist.

5. Verfahren nach einem der vorstehenden Patentansprüche, wobei die Änderungsanforderungsmitteilung ein REMAP-Rahmen des RLP ist.

6. Verfahren nach einem der vorstehenden Patentansprüche, wobei der nummerierte Rahmen ein I+S-Rahmen des RLP ist.

7. Vorrichtung zum Erreichen einer Synchronisation mit einem Kommunikationsendpunkt (1) während eines Verbindungsmodusänderungsvorgangs, mit:
a) einer Erfassungseinrichtung (34) zum Erfassen einer von dem Kommunikationsendpunkt (1) empfangenen Verbindungsmodusänderungsanforderungsmitteilung;
b) einer Kommunikationseinrichtung (32) zum Durchführen einer Kommunikation mit dem Kommunikationsendpunkt (1);
c) einer Steuereinrichtung (33) zum Versetzen der Kommunikationseinrichtung (32) in einen Verbindungsmodusänderungszustand als Reaktion auf das Erfassungsergebnis der Erfassungseinrichtung (34);
d) wobei die Kommunikationseinrichtung (32) zum Senden einer Bestätigungsmitteilung und eines nummerierten Rahmens zu dem Kommunikationsendpunkt als Reaktion auf das Versetzen in den Verbindungsmodusänderungszustand durch die Steuereinrichtung (33) eingerichtet ist; und
e) wobei die Steuereinrichtung (33) zum Steuern der Kommunikationseinrichtung (32) zum Verlassen des Verbindungsmodusänderungszustandes als Reaktion auf den Empfang einer den nummerierten Rahmen von dem Kommunikationsendpunkt (1) bestätigenden Bestätigung eingerichtet ist.

8. Vorrichtung nach Patentanspruch 7, wobei die Vorrichtung eine Zusammenarbeitseinheit (31) eines GSM-Netzes ist.

9. Vorrichtung nach Patentanspruch 7 oder 8, wobei der Kommunikationsendpunkt eine Mobilstation (1) ist.

10. Vorrichtung nach einem der Patentansprüche 7 bis 9, wobei der Verbindungsmodusänderungsvorgang ein REMAP-Vorgang des RLP ist.

11. Vorrichtung nach Patentanspruch 10, wobei die Erfassungseinrichtung (34) zum Erfassen eines REMAP-Rahmens des RLP eingerichtet ist.

12. Vorrichtung nach einem der Patentansprüche 7 bis 11, wobei eine Zähleinrichtung (35) zum Zählen der Anzahl von durch die Kommunikationseinrichtung (32) gesendeten Bestätigungsmitteilungen eingerichtet ist, und die Steuereinrichtung (33) zur Durchführung einer Steuerung eingerichtet ist, so dass die Kommunikationseinrichtung (32) den nummerierten Rahmen sendet, nachdem die Zähleinrichtung (35) einen vorbestimmten Wert erreicht hat.

13. Vorrichtung nach einem der Patentansprüche 7 bis 12, wobei der nummerierte Rahmen ein I+S-Rahmen des RLP ist.

## Revendications

1. Procédé pour synchroniser des premier (1) et deuxième (3 1) points d'extrémité de communication pendant une procédure de changement de mode de connexion, ledit procédé comprenant les étapes consistant à :
a) entrer dans un état de changement de mode de connexion audit premier point d'extrémité (1) ;
b) transmettre un message de demande de changement de mode de connexion dudit premier point d'extrémité (1) audit deuxième point d'extrémité (31) ;
c) entrer dans un état de changement de mode de connexion audit deuxième point d'extrémité (31) en réponse à une réception dudit message de demande de changement de mode de connexion ;
d) transmettre un message d'acquittement et une trame numérotée dudit deuxième point d'extrémité (31) audit premier point d'extrémité (1) ;
e) quitter ledit état de changement de mode de connexion audit premier point d'extrémité (1) en réponse à une réception dudit message d'acquittement ;
f) transmettre dudit premier point d'extrémité (1) audit deuxième point d'extrémité (31) un acquittement acquittant ladite trame numérotée ; et
g) quitter ledit état de changement de mode de connexion audit deuxième point d'extrémité (31) en réponse à une réception dudit acquittement acquittant ladite trame numérotée.

2. Procédé selon la revendication 1, dans lequel ledit premier point d'extrémité est une station mobile (1) et ledit deuxième point d'extrémité est une unité d'interfonctionnement (31).

3. Procédé selon la revendication 1 ou 2, dans lequel ladite procédure de changement de mode de connexion est un changement de codage de canal.

4. Procédé selon la revendication 3, dans lequel ledit changement de codage de canal est un changement entre TCH/F14.4 et TCH/F9.6 dans le protocole RLP.

5. Procédé selon l'une quelconque des revendications précédentes, dans lequel ledit message de demande de changement est une trame REMAP du protocole RLP.

6. Procédé selon l'une quelconque des revendications précédentes, dans lequel ladite trame numérotée est une trame I+S du protocole RLP.

7. Dispositif pour obtenir une synchronisation avec un point d'extrémité de communication (1) pendant une procédure de changement de mode de connexion, ledit dispositif comprenant :
a) des moyens de détection (34) pour détecter un message de demande de changement de mode de connexion reçu dudit point d'extrémité de communication (1) ;
b) des moyens de communication (32) pour effectuer une communication avec ledit point d'extrémité de communication (1) ;
c) des moyens de contrôle (33) pour mettre lesdits moyens de communication (32) dans un état de changement de mode de connexion en réponse au résultat de détection desdits moyens de détection (34) ;
d) dans lequel lesdits moyens de communication (32) sont agencés pour transmettre un message d'acquittement et une trame numérotée audit point d'extrémité de communication en réponse à ladite mise dans ledit état de changement de mode de connexion par lesdits moyens de contrôle (33) ; et
e) dans lequel lesdits moyens de contrôle (33) sont agencés pour contrôler lesdits moyens de communication (32) de manière à quitter ledit état de changement de mode de connexion en réponse à une réception d'un acquittement acquittant ladite trame numérotée provenant dudit point d'extrémité de communication (1).

8. Dispositif selon la revendication 7, dans lequel ledit dispositif est une unité d'interfonctionnement (31) d'un réseau GSM.

9. Dispositif selon la revendication 7 ou 8, dans lequel ledit point d'extrémité de communication est une station mobile (1).

10. Dispositif selon l'une quelconque des revendications 7 à 9, dans lequel ladite procédure de changement de mode de connexion est une procédure REMAP du protocole RLP.

11. Dispositif selon la revendication 10, dans lequel lesdits moyens de détection (34) sont agencés pour détecter une trame REMAP du protocole RLP.

12. Dispositif selon l'une quelconque des revendications 7 à 11, dans lequel des moyens de comptage (35) sont prévus pour compter le nombre de messages d'acquittement transmis par lesdits moyens de communication (32), et lesdits moyens de contrôle (33) sont agencés pour effectuer un contrôle de sorte que lesdits moyens de communication (32) transmettent ladite trame numérotée après que lesdits moyens de comptage (35) aient atteint une valeur prédéterminée.

13. Dispositif selon l'une quelconque des revendications 7 à 12, dans lequel ladite trame numérotée est une trame I+S du protocole RLP.
